# EUROPEAN PATENT SPECIFICATION

(11) **EP 4 239 234 B1**
(45) Date of publication and mention of the grant of the patent: **17.06.2026**
(21) Application number: 21885965.0
(22) Date of filing: 18.10.2021
(51) Int. Cl.: F16L 9/02, B24B 5/06, B24B 5/40, F16J 12/00, F17C 1/10, B24B 1/00

(54) **STEEL PIPE OR TUBE FOR HYDROGEN GAS, METHOD FOR MANUFACTURING STEEL PIPE OR TUBE FOR HYDROGEN GAS, PRESSURE VESSEL FOR HYDROGEN GAS, AND METHOD FOR MANUFACTURING PRESSURE VESSEL FOR HYDROGEN GAS**
STAHLROHR FÜR WASSERSTOFFGAS, VERFAHREN ZUR HERSTELLUNG EINES STAHLROHRS FÜR WASSERSTOFFGAS, DRUCKBEHÄLTER FÜR WASSERSTOFFGAS UND VERFAHREN ZUR HERSTELLUNG EINES DRUCKBEHÄLTERS FÜR WASSERSTOFFGAS
TUYAU EN ACIER POUR HYDROGÈNE GAZEUX, PROCÉDÉ DE FABRICATION DUDIT TUYAU, RÉCIPIENT SOUS PRESSION POUR HYDROGÈNE GAZEUX, ET PROCÉDÉ DE FABRICATION DUDIT RÉCIPIENT

(30) Priority: 30.10.2020 JP 2020183266
(43) Date of publication of application: 06.09.2023
(73) Proprietor: JFE Steel Corporation, Tokyo 100-0011 (JP)
(72) Inventor: MATSUBARA, Kazuki, Tokyo 100-0011 (JP); OKANO, Hiroshi, Tokyo 100-0011 (JP); TAKAGI, Shusaku, Tokyo 100-0011 (JP)
(74) Representative: Haseltine Lake Kempner LLP
(86) International application number: PCT/JP2021/038462
(87) International publication number: WO 2022/091846

(56) References cited:
- CN-A- 107 435 814
- CN-B- 107 435 814
- CN-U- 208 468 043
- CN-U- 208 468 043
- JP-A- 2009 299 174
- JP-A- 2016 172 909
- JP-A- 2017 048 912
- JP-A- 2019 044 890
- JP-A- 2019 044 969
- JP-A- 2019 113 121
- JP-U- S5 475 461

## Description

### TECHNICAL FIELD

This disclosure relates to a steel pipe or tube for hydrogen gas, in particular to a steel pipe or tube for hydrogen gas that has both excellent hydrogen embrittlement resistance and high productivity and can be used very suitably as parts of pressure vessels for hydrogen gas, and the like. This disclosure also relates to a method for manufacturing the steel pipe or tube for hydrogen gas, pressure vessel for hydrogen gas, and method for manufacturing the pressure vessel for hydrogen gas.

### BACKGROUND

Steel pipes or tubes are used in various applications such as piping and structural parts because of their superior strength and relatively low cost. Recently, they have also been proposed to be used as parts used in contact with hydrogen gas, such as pressure vessels for hydrogen gas.

However, steels has a property called hydrogen embrittlement, in which ductility decreases due to hydrogen entering the steel. Therefore, when the steel pipe or tube is used in contact with hydrogen gas, fracture may occur due to hydrogen embrittlement. In particular, when the steel pipe or tube is used for pressure vessels for hydrogen gas, not only is high internal pressure applied on the steel pipe or tube by the high-pressure hydrogen gas filled inside, but the steel pipe or tube is also subjected to repeated stress due to the repeated release and filling of hydrogen gas. Therefore, the problem of fatigue fracture caused by hydrogen embrittlement becomes more serious.

Therefore, various techniques have been proposed to improve the hydrogen embrittlement resistance of steel material.

For example, JP2018-053357A (PTL 1) proposes a technique to improve the hydrogen embrittlement resistance by controlling the chemical composition and microstructure of the steel pipe or tube used as a liner for pressure vessel for hydrogen gas.

In addition, JP2009-275249A (PTL 2) proposes a technique to improve the hydrogen embrittlement resistance by controlling the chemical composition of the low-alloy steel used for pressure vessel for hydrogen gas.

JP2018-012855A (PTL 3) proposes a technique to improve the fatigue resistance in the high pressure hydrogen environment by reducing the amount of coarse inclusions, which are the initiation point of fatigue fracture, in the low-alloy steel used for pressure vessel for hydrogen gas.

JP2019-113121A discloses a pressure accumulator for high-pressure hydrogen gas.

CN 208468043 U discloses an inside grinding device of a steel pipe.

### CITATION LIST

### Patent Literature

PTL 1: JP2018-053357A
PTL 2: JP2009-275249A
PTL 3: JP2018-012855A

### SUMMARY

### (Technical problem)

Conventional techniques, such as those proposed in PTLs 1-3, all focus on the metallurgical properties of steel to improve its hydrogen embrittlement resistance. Therefore, in order to apply those techniques to the steel pipe or tube, it was necessary to strictly control the microstructure and the state of inclusions of the steel by adjusting the chemical composition of the steel at the steelmaking stage, and furthermore, adjusting conditions in the pipe or tube forming process and heat treatment process. Therefore, in addition to the limited number of applicable steel type, it could not be said to have excellent productivity.

It could thus be helpful to provide a steel pipe or tube for hydrogen gas that has both excellent hydrogen embrittlement resistance and high productivity and can be used very suitably as parts of pressure vessels for hydrogen gas and the like. It could also be helpful to provide a pressure vessel for hydrogen gas using the steel pipe or tube for hydrogen gas.

### (Solution to Problem)

As a result of our study to solve the above problem, we have found that excellent hydrogen embrittlement resistance can be obtained by an extremely simple method in which the angle of a polishing trace formed on the inner surface of the steel pipe or tube is controlled within a specific range when the inner surface of the steel pipe or tube is finish polished.

This disclosure is based on the aforementioned discoveries and main features thereof are as follows.
1. A steel pipe or tube for hydrogen gas, comprising a finish-polished inner surface, wherein an inclination angle of a polishing trace present on the inner surface with respect to a circumferential direction of the steel pipe or tube for hydrogen gas is 0° to 30°, and wherein a maximum height Rz, according to JIS B 0601:2001, of the inner surface is 25 µm or more.
2. A method for manufacturing a steel pipe or tube for hydrogen gas, comprising polishing an inner surface of a steel pipe or tube as a polishing object by moving the steel pipe or tube relative to a polishing tool while the polishing tool is in contact with the inner surface of the steel pipe or tube, wherein an inclination angle of a polishing trace formed on the inner surface of the steel pipe or tube with respect to a circumferential direction of the steel pipe or tube is 0° to 30°, and wherein a maximum height Rz, according to JIS B 0601:2001, of the inner surface is 25 µm or more.
3. A pressure vessel for hydrogen gas using the steel pipe or tube for hydrogen gas according to 1.
4. A method for manufacturing a pressure vessel for hydrogen gas, comprising working the steel pipe or tube for hydrogen gas according to 1. into the pressure vessel for hydrogen gas.

### (Advantageous Effect)

The steel pipe or tube for hydrogen gas of this disclosure not only has excellent hydrogen embrittlement resistance, but also has excellent productivity because it can be manufactured by the extremely simple method in which the angle of a polishing trace is controlled within a specific range when the inner surface of the steel pipe or tube is finish polished. Therefore, by using the steel pipe or tube for hydrogen gas of this disclosure, pressure vessels for hydrogen gas with excellent hydrogen embrittlement resistance can be manufactured efficiently and inexpensively. In addition, because the technique of this disclosure utilizes the mechanical relationship between the stress applied to the steel pipe or tube and the polishing trace, as described below, it can be applied to a variety of steel pipes or tubes regardless of the steel type, unlike conventional techniques that utilize the metallurgical properties of the steel.

### BRIEF DESCRIPTION OF THE DRAWINGS

In the accompanying drawings:

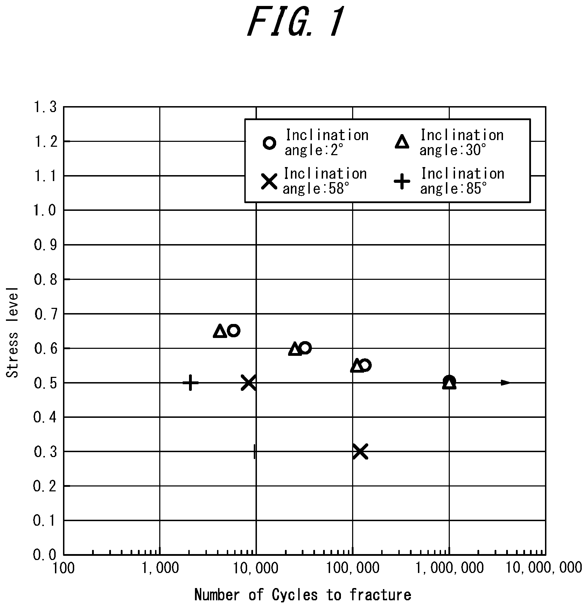

FIG. 1 illustrates a graph of results of the full swing fatigue life test.

### DETAILED DESCRIPTION

This disclosure will be described in detail hereinafter. Note that this disclosure is not limited to the following embodiment.

### [Steel pipe or tube for hydrogen gas]

First, the steel pipe or tube for hydrogen gas according to one of the disclosed embodiments will be described. The steel pipe or tube for hydrogen gas is a steel pipe or tube for hydrogen gas having a finish-polished inner surface, in which the angle (hereinafter referred to as "inclination angle") of a polishing trace present on the inner surface with respect to a circumferential direction of the steel pipe or tube for hydrogen gas is 0° to 30°.

### Inclination angle: 0° to 30°

When finish polishing the inner surface of the steel pipe or tube, polishing is generally performed by moving a polishing tool such as a grindstone relative to the steel pipe or tube. Therefore, polishing traces are formed on the inner surface of the steel pipe or tube after the finish polishing according to the direction of movement of the polishing tool during polishing. Focusing on each of the polishing traces, the polishing trace can be regarded as a notch-like defect that has some depth in the thickness direction from the inner surface of the steel pipe or tube.

On the other hand, since the steel pipe or tube has a circular cross section and is open in the longitudinal direction, when pressure is applied to the steel pipe or tube in use, the load is applied mainly in the circumferential direction of the steel pipe or tube. For example, when the steel pipe or tube is used for a pressure vessel for hydrogen gas, the vessel (steel pipe or tube) is applied with loads mainly in the circumferential direction as the vessel is filled with high pressure hydrogen gas.

Therefore, if the direction of the polishing trace, which is a notch-like defect, is close to the longitudinal direction (pipe or tube axial direction) of the steel pipe or tube, stress will be concentrated at the bottom of the polishing trace because the load is applied in the direction that causes the notch to open. In a typical environment, such as in the air, such stress applied to the polishing trace would not cause substantial problems, but in the presence of hydrogen gas, stress applied to the polishing trace would significantly affect fatigue resistance due to hydrogen embrittlement. This is because dislocations, which are lattice defects in steel, increase in stress concentrated areas, resulting in increased hydrogen intrusion amount and, consequently, more pronounced hydrogen embrittlement. Therefore, in a hydrogen gas environment, when the direction of the polishing trace is close to the longitudinal direction (pipe or tube axial direction) of the steel pipe or tube, crack initiation is accelerated, and fatigue resistance becomes poor.

Therefore, in this disclosure, the inclination angle of the polishing trace present on the inner surface of the steel pipe or tube with respect to the circumferential direction is 30° or less in order to suppress the occurrence of cracks caused by the stress applied on the polishing trace. When the inclination angle is 30° or less, stress is not concentrated at the bottom of the polishing trace even when the direction of the polishing trace is close to the circumferential direction of the steel pipe or tube and the load is applied to the steel pipe or tube in the circumferential direction, and as a result, crack initiation in a hydrogen gas environment can be suppressed.

Since the effect is increased as the direction of the polishing trace is closer to the circumferential direction of the steel pipe or tube, the inclination angle is preferably 25° or less, more preferably 20° or less, and further preferably 15° or less. Meanwhile, the direction of the polishing trace may be the same as the circumferential direction of the steel pipe or tube; therefore, the lower limit of the inclination angle is 0°.

As described above, this disclosure can improve the hydrogen embrittlement resistance of steel pipe or tube by the extremely simple method in which the angle of polishing trace is controlled within the specific range.

In addition to controlling the direction of the polishing trace, another possible method to prevent the reduction of fatigue resistance caused by stress concentration on the polishing trace as described above is to reduce the surface roughness. In fact, in pressure vessels for hydrogen gas, it was common for the inner surface of the vessel (steel pipe or tube) to be mirror polished. However, in order to reduce surface roughness to a level known as mirror polishing, electropolishing or other processes must be performed after the steel pipe or tube is worked, which reduces productivity. In contrast, this disclosure does not require polishing to the level of what is called mirror polishing because excellent hydrogen embrittlement resistance can be achieved by controlling the direction of the polishing trace. Therefore, it can be said that the steel pipe or tube for hydrogen gas of this disclosure has excellent productivity from the viewpoint that processes such as mirror polishing are not required.

The inclination angle of the polishing trace can be measured by analyzing an image obtained by imaging the inner surface of the steel pipe or tube with a microscope. Specifically, an image is first taken so that the circumferential direction of the steel pipe or tube is parallel to the x-axis of the image. Next, for all polishing traces in the obtained image, the inclinations from the x-axis (absolute values of the inclination angles of the polishing traces) are measured. A frequency distribution of the measured inclination angles of the polishing traces is created, and an average value obtained by fitting using a Gaussian function to the frequency distribution is used as the inclination angle.

More specifically, first, six samples are taken from the steel pipe or tube for observation of the inner surface. The size of the sample should be such that it can be placed on the stage of the microscope. For example, the digital microscope HRX-01 manufactured by Hirox Co., Ltd. can be used as the microscope described above. The sample size can be, for example, 10 mm wall thickness × 100 mm steel pipe or tube circumferential length × 100 mm steep pipe or tube longitudinal length. The six samples are taken from random locations on the steel pipe or tube. However, since the entire inner surface of a steel pipe or tube is usually polished under the same conditions, three samples taken from each end of the steel pipe or tube, which are easy to collect, can be used for the measurement.

Next, the surface of each sample (the inner side of the steel pipe or tube) is imaged with a microscope. At that time, the sample is placed on the microscope stage so that the circumferential direction of the steel pipe or tube is parallel to the x-axis of the image. The area to be imaged should be, for example, 3 mm × 3 mm per sample, and at least 5 fields of view should be imaged. Since the inner surface of the steel pipe or tube is curved, a three-dimensional image coupling system is used to acquire images.

The obtained image is then analyzed to measure the inclinations from the x-axis (absolute values of the inclination angles of the polishing traces). At that time, a continuous line of 1 mm or more in length and 0.01 mm or more in width among the lines observed in the image is considered as the polishing trace. When the line is curved or bent, the line is approximated as a series of line segments of 1 mm or more in length, and each line segment is considered an independent polishing trace. A frequency distribution of the measured inclination angles of the polishing traces is created, and the average value obtained by fitting using a Gaussian function to the frequency distribution is used as the inclination angle.

In the case of automatic polishing, although all polishing traces are roughly parallel, it may be difficult to measure the inclination angles of all the polishing traces because the number of polishing traces observed in a single field of view is extremely large. Thus, when the number of polishing traces per field of view is extremely large, the angle calculated by the following procedure can be used as the inclination angle of the polishing trace.
(1) First, the approximate angle of the polishing traces in the field of view (hereinafter referred to as "major angle") is determined visually. The major angle is in increments of 5°. In detail, a representative angle of all the polishing traces present in the field of view is selected from 0°, 5°, 10°, 15°, 20°, 25°, 30°, 35°, 45°, 50°, 55°, 60°, 65°, 70°, 75°, 80°, 85°, and 90°.
(2) Then, the inclination angle of any polishing trace among all the polishing traces in the field of view is measured, and when the difference between the inclination angle and the major angle is within 5°, the polishing trace is selected as the representative polishing trace. This procedure is repeated until the number of representative polishing traces selected is 40.
(3) From the 40 representative polishing traces selected, 20 polishing traces are extracted so that the difference between the maximum and minimum inclination angles is the smallest.
(4) A frequency distribution of the inclination angles of the 20 extracted polishing traces is created, and the average value obtained by fitting using a Gaussian function to the frequency distribution is used as the inclination angle.

### Rz: 20 µm or less

The roughness of the inner surface of the steel pipe or tube for hydrogen gas is not particularly limited and may be any roughness. However, as described above, unlike conventional techniques, the steel pipe or tube for hydrogen gas of this disclosure does not need to be smoothed to the level of what is called mirror polishing because the hydrogen embrittlement resistance is improved by controlling the direction of the polishing trace. Therefore, Rz of the inner surface of the steel pipe or tube for hydrogen gas is larger than 20 µm. In the present invention, from the viewpoint of eliminating excessive polishing to further improve productivity, Rz is 25 µm or more, and more preferably 30 µm or more.

On the other hand, no upper limit is placed on Rz, but when the surface is excessively rough, the effect of stress concentration may not be negligible. Therefore, Rz is preferably 300 µm or less, more preferably 200 µm or less, still more preferably 180 µm or less, and further preferably 160 µm or less.

Here, Rz is the maximum height in JIS B0601:2001. Rz can be measured by the method described in the EXAMPLES section.

The material property of the steel pipe or tube for hydrogen gas is not limited and any steel pipe or tube can be used. For example, from a cost perspective, the steel pipe or tube is preferably made of low-alloy steel, and in particular, the steel pipe or tube is preferably made of any of chromium molybdenum steel, nickel chromium molybdenum steel, manganese chromium steel, manganese steel, and boron-added steel. Among them, from the viewpoint of both material strength and cost, it is more preferable to use chrome molybdenum steel or chrome molybdenum nickel steel, which is easier to ensure quench hardenability.

As the above mentioned steel pipe or tube, a steel pipe or tube manufactured by any method can be used without any particular limitation. The steel pipe or tube may be, for example, forge welded steel pipe or tube, welded steel pipe or tube, or seamless steel pipe or tube, but seamless steel pipe or tube is preferred. In addition to having excellent toughness and other properties, the seamless steel pipe or tube can be used extremely well for applications such as high-pressure gas vessels because it does not have joints.

The size of the steel pipe or tube is not particularly limited, and a steel pipe or tube of any size can be used. From the viewpoint of manufacturability, the outer diameter of the steel pipe or tube is preferably 1800 mm or less, more preferably 700 mm or less, and further preferably 500 mm or less. The outer diameter of the steel pipe or tube is preferably 20 mm or more, more preferably 100 mm or more, and further preferably 300 mm or more. The wall thickness of the steel pipe or tube is not particularly limited, but from the viewpoint of strength, it is preferably 5 mm or more, more preferably 10 mm or more, and further preferably 30 mm or more. The wall thickness of the steel pipe or tube is preferably 100 mm or less, more preferably 80 mm or less, and further preferably 70 mm or less.

### [Method for manufacturing steel pipe or tube for hydrogen gas]

The following describes a method for manufacturing a steel pipe or tube for hydrogen gas according to one of the disclosed embodiments. The steel pipe or tube for hydrogen gas of this disclosure can be manufactured by polishing the inner surface of the steel pipe or tube so that the inclination angle of the polishing trace meets the above-mentioned conditions.

Specifically, the inner surface of the steel pipe or tube should be polished by moving the steel pipe or tube relative to a polishing tool while the polishing tool is in contact with the inner surface of the steel pipe or tube. At that time, the inclination angles of polishing traces formed on the inner surface of the steel pipe or tube with respect to a circumferential direction of the steel pipe or tube are set to 0° to 30°.

The method for moving of the steel pipe or tube is not limited, but for example, the steel pipe or tube can be rotated in the circumferential direction of the steel pipe or tube relative to the polishing tool, and the steel pipe or tube can be moved in the longitudinal direction of the steel pipe or tube relative to the polishing tool. The rotation in the circumferential direction and the movement in the longitudinal direction may be performed independently, continuously or intermittently. For example, when the inclination angle is set to 0°, the process should be repeated that includes polishing the steel pipe or tube in the circumferential direction without moving the steel pipe or tube in the longitudinal direction, then moving the steel pipe or tube in the longitudinal direction while polishing is stopped, and then polishing the steel pipe or tube again in the circumferential direction.

The method for manufacturing a steel pipe or tube for hydrogen gas in one of the disclosed embodiments can include a polishing condition determining process to determine the rotational speed in the circumferential direction and the movement speed in the longitudinal direction so that the inclination angles of the polishing traces formed on the inner surface of the steel pipe or tube with respect to the circumferential direction of the steel pipe or tube are 0 to 30°. The polishing conditions mentioned above should normally be determined before the start of polishing.

Determining the conditions so that the inclination angle is 0 to 30° means that the conditions are determined so that the calculated value of the inclination angle obtained from the rotational speed in the circumferential direction and the movement speed in the longitudinal direction is 0 to 30°. In actual polishing, polishing traces are formed in approximately parallel, but variations in the inclination angles of the polishing traces are allowed.

As for the polishing tool, any publicly known polishing tool such as one for finish polishing can be used, without any particular limitation. Both wet polishing and dry polishing methods can be used for polishing, but dry polishing is preferred from the perspective of simplifying cleaning and other post-treatment.

According to the method described above, since the polishing is performed while the polishing tool is moved relative to the steel pipe or tube, the entire steel pipe or tube inner surface can be polished using a polishing tool of a size smaller than the total surface area of the inner surface of the steel pipe or tube. However, the disclosed method is an example of the suitable method for manufacturing a steel pipe or tube for hydrogen gas of this disclosure, and the steel pipe or tube for hydrogen gas of this disclosure is not limited to those manufactured by this method.

As long as the inclination angles of the finally obtained polishing traces satisfy the above-mentioned condition, any other treatment other than polishing by the above method may be applied. For example, after polishing by the method described above, additional partial polishing may be performed. After polishing is performed with the above method using automatic polishing, areas where polishing or defects exist can be partially polished by hand.

The surface obtained by polishing is highly active and easily oxidized. Therefore, from the viewpoint of preventing the formation of rust, it is preferable to apply anti-corrosion treatment after polishing the inner surface of the steel pipe or tube. As an anti-corrosion treatment, it is preferable to apply anti-corrosion oil to the surface of the steel pipe or tube. It is also desirable to provide lids at both ends of the steel pipe or tube to prevent water and other substances from outside from entering the steel pipe or tube. In addition, it is desirable to enclose the desiccant in the steel pipe or tube.

### [Pressure vessel for hydrogen gas]

The steel pipe or tube for hydrogen gas can be used in any application where it is used in contact with hydrogen gas, such as pressure vessels for hydrogen gas and pipe for hydrogen gas. Among them, it is particularly suitable for use as steel pipe or tube for high-pressure hydrogen gas used in high-pressure hydrogen gas environments.

For example, when the steel pipe or tube for hydrogen gas is used for pressure vessel for hydrogen gas, the pressure vessel for hydrogen gas can be manufactured by applying the necessary processing to the steel pipe or tube for hydrogen gas. The processing is not limited to any particular process, but includes, for example, the process of attaching a lid to the end of a steel pipe or tube. Processing to attach the lid includes, for example, providing a thread at the end of the steel pipe or tube to screw the lid on, or forming a flange to bolt the lid on.

Since the steel pipe or tube for hydrogen gas of this disclosure has excellent hydrogen embrittlement resistance with the presence of polishing traces, it can be used as it is even when used as a pressure vessel for hydrogen gas, without the need for additional mirror polishing or other processing on the inner surface of the steel pipe or tube (vessel).

### EXAMPLES

In order to confirm the effect of this disclosure, a fatigue test was conducted according to the procedure described below to evaluate the effect of the inclination angle of the polishing trace on the fatigue resistance of the steel material.

First, a steel material made of nickel chromium molybdenum steel (SNCM439) was subjected to heat treatment to obtain a steel material with a tensile strength of 892 MPa, and a smooth round bar test piece with a parallel portion length of 20 mm was taken from the steel material. Once the surface of the test piece was mirror-polished, polishing was performed by rubbing it in one direction with emery paper to form polishing traces at various inclination angles.

### (Inclination angle)

The inclination angles of the polishing traces formed on the surface of the test piece were measured using the procedure described above. In this example, the test was conducted using the round bar test piece to simulate a steel pipe or tube, so the longitudinal direction of the test piece, which is the direction in which the stress is applied, corresponds to the circumferential direction in the steel pipe or tube. Therefore, the sample for inclination angle measurement was taken from the round bar test piece so that the longitudinal direction of the test piece and the x-direction of the image were parallel. Therefore, in the following description, the angle of the polishing trace relative to the longitudinal direction of the test piece is expressed as the inclination angle. The polishing trace was observed using the HRX-01 digital microscope manufactured by Hirox Co., Ltd. The measurement results are listed in Table 1.

### (Rz)

The maximum height Rz (JIS B0601:2001) of the test piece was measured using part of the 3D measurement function implemented in the HRX-01 digital microscope manufactured by Hirox Co., Ltd. The measurement results are listed in Table 1.

### (Fatigue life test)

Next, the test piece was subjected to a full swing fatigue life test at a stress ratio of R=-1 in a high-pressure hydrogen gas atmosphere at room temperature and a pressure of 105 MPa. The stress levels (applied stress/tensile strength) in the fatigue life test are listed in Table 1. In the test, the test frequency was set to 1 Hz, and the test was interrupted when no fracture occurred when the number of cycles N reached 1 million.

The results of the fatigue life test are as listed in Table 1. The results for samples with Rz around 8 µm are plotted in FIG. 1. As can be seen from the results indicated in Table 1 and FIG. 1, the steel pipes or tubes meeting the conditions of this disclosure have excellent fatigue life in a high-pressure hydrogen gas atmosphere.

### [Table 1]

**Table 1**

| Steel pipe or tube | | Fatigue test | | Remarks |
|---|---|---|---|---|
| Inclination angle (°) | Rz (µm) | Stress level (-) | Number of cycles to fracture (times) | |
| 2 | 8 | 0.65 | 7000 | Example |
| 3 | 9 | 0.60 | 35000 | Example |
| 3 | 7 | 0.55 | 150000 | Example |
| 2 | 7 | 0.50 | no fracture | Example |
| 29 | 7 | 0.65 | 4200 | Example |
| 30 | 6 | 0.60 | 25000 | Example |
| 27 | 8 | 0.55 | 110000 | Example |
| 27 | 7 | 0.50 | no fracture | Example |
| 61 | 6 | 0.50 | 120000 | Comparative Example |
| 59 | 8 | 0.30 | 8300 | Comparative Example |
| 84 | 7 | 0.50 | 9500 | Comparative Example |
| 86 | 8 | 0.30 | 2100 | Comparative Example |
| 29 | 18 | 0.50 | no fracture | Example |
| 29 | 23 | 0.50 | no fracture | Example |
| 28 | 25 | 0.50 | no fracture | Example |
| 30 | 21 | 0.50 | no fracture | Example |
| 29 | 22 | 0.50 | no fracture | Example |
| 26 | 23 | 0.50 | no fracture | Example |
| 58 | 26 | 0.50 | 57000 | Comparative Example |
| 82 | 22 | 0.50 | 6100 | Comparative Example |
| 29 | 51 | 0.50 | no fracture | Example |
| 28 | 98 | 0.50 | no fracture | Example |
| 27 | 158 | 0.50 | no fracture | Example |

## Claims

1. A steel pipe or tube for hydrogen gas, comprising a finish-polished inner surface,
wherein an inclination angle of a polishing trace present on the inner surface with respect to a circumferential direction of the steel pipe or tube for hydrogen gas is 0° to 30°, and
**characterized in that** a maximum height Rz, according to JIS B 0601:2001, of the inner surface is 25 µm or more.

2. A method for manufacturing a steel pipe or tube for hydrogen gas, comprising polishing an inner surface of a steel pipe or tube as a polishing object by moving the steel pipe or tube relative to a polishing tool while the polishing tool is in contact with the inner surface of the steel pipe or tube,
wherein an inclination angle of a polishing trace formed on the inner surface of the steel pipe or tube with respect to a circumferential direction of the steel pipe or tube is 0° to 30°, and
**characterized in that** a maximum height Rz, according to JIS B 0601:2001, of the inner surface is 25 µm or more.

3. A pressure vessel for hydrogen gas comprising the steel pipe or tube for hydrogen gas according to claim 1.

4. A method for manufacturing a pressure vessel for hydrogen gas, comprising working the steel pipe or tube for hydrogen gas according to claim 1 into the pressure vessel for hydrogen gas.

## Patentansprüche

1. Stahlrohr oder -schlauch für Wasserstoffgas, umfassend eine endpolierte Innenfläche,
wobei ein Neigungswinkel einer auf der Innenfläche vorhandenen Polierspur in Bezug auf eine Umfangsrichtung des Stahlrohrs oder -schlauchs für Wasserstoffgas 0° bis 30° beträgt, und
**dadurch gekennzeichnet, dass** eine maximale Höhe Rz gemäß JIS B 0601:2001 der Innenfläche 25 µm oder mehr beträgt.

2. Verfahren zum Herstellen eines Stahlrohrs oder -schlauchs für Wasserstoffgas, umfassend Polieren einer Innenfläche eines Stahlrohrs oder -schlauchs als ein Polierobjekt durch Bewegen des Stahlrohrs oder -schlauchs relativ zu einem Polierwerkzeug, während das Polierwerkzeug in Kontakt mit der Innenfläche des Stahlrohrs oder -schlauchs ist,
wobei ein Neigungswinkel einer auf der Innenfläche des Stahlrohrs oder -schlauchs gebildeten Polierspur in Bezug auf eine Umfangsrichtung des Stahlrohrs oder -schlauchs 0° bis 30° beträgt, und
**dadurch gekennzeichnet, dass** eine maximale Höhe Rz gemäß JIS B 0601:2001 der Innenfläche 25 µm oder mehr beträgt.

3. Druckbehälter für Wasserstoffgas, umfassend das Stahlrohr oder den -schlauch für Wasserstoffgas nach Anspruch 1.

4. Verfahren zum Herstellen eines Druckbehälters für Wasserstoffgas, umfassend Bearbeiten des Stahlrohrs oder - schlauchs für Wasserstoffgas nach Anspruch 1 zu dem Druckbehälter für Wasserstoffgas.

## Revendications

1. Tube ou tuyau en acier pour gaz hydrogène, comprenant une surface interne à finition polie,
dans lequel un angle d'inclinaison d'une trace de polissage présente sur la surface interne par rapport à une direction circonférentielle du tube ou tuyau en acier pour gaz hydrogène est de 0 ° à 30 °, et
**caractérisé en ce qu'**une hauteur maximale Rz, selon la norme JIS B 0601:2001, de la surface interne est de 25 µm ou plus.

2. Procédé de fabrication d'un tube ou tuyau en acier pour gaz hydrogène, comprenant le polissage d'une surface interne d'un tube ou tuyau en acier en tant qu'objet de polissage en déplaçant le tube ou tuyau en acier par rapport à un outil de polissage tandis que l'outil de polissage est en contact avec la surface interne du tube ou tuyau en acier,
dans lequel un angle d'inclinaison d'une trace de polissage formée sur la surface interne du tube ou tuyau en acier par rapport à une direction circonférentielle du tube ou tuyau en acier est de 0 ° à 30 °, et
**caractérisé en ce qu'**une hauteur maximale Rz, selon la norme JIS B 0601:2001, de la surface interne est de 25 µm ou plus.

3. Récipient sous pression pour gaz hydrogène comprenant le tube ou tuyau en acier pour gaz hydrogène selon la revendication 1.

4. Procédé de fabrication d'un récipient sous pression pour gaz hydrogène, comprenant l'intégration du tube ou tuyau en acier pour gaz hydrogène selon la revendication 1 dans le récipient sous pression pour gaz hydrogène.
